# EUROPEAN PATENT SPECIFICATION

(11) **EP 1 388 576 B1**
(45) Date of publication and mention of the grant of the patent: **13.02.2013**
(21) Application number: 03254521.2
(22) Date of filing: 18.07.2003
(51) Int. Cl.: C09D 11/00

(54) **Fluid set for ink-jet printers**
Flüssigkeitssatz für Tintenstrahldrucker
Assortiment de liquides pour imprimantes à jet d'encre

(30) Priority: 30.07.2002 US 208992
(43) Date of publication of application: 11.02.2004
(73) Proprietor: Hewlett-Packard Development Company, L.P., Houston, TX 77070 (US)
(72) Inventor: Lee, Melissa D., Escondido, CA 92029 (US)
(74) Representative: Tollett, Ian

(56) References cited:
- EP-A- 1 106 658
- EP-A- 1 152 017

## Description

The present invention generally relates to an ink-set for ink-jet printing, and more particularly, waterfast ink-jet ink compositions containing the same. The colorants of this invention, when interacted with a second reactive fluid, provides high optical density and superior durability to acid and alkaline highlighter and wet smudge benefits.

The use of ink-jet printing systems has grown dramatically in recent years. This growth may be attributed to substantial improvements in print resolution and overall print quality, coupled with appreciable reduction in cost. Today's ink-jet printers offer acceptable print quality for many industrial, commercial, business and residential applications at costs fully an order of magnitude lower than comparable products available just a few years ago. Notwithstanding their recent success, intensive research and development efforts continue toward improving the durability and permanence issues of ink-jet images, especially when the printed media is subjected to wetness.

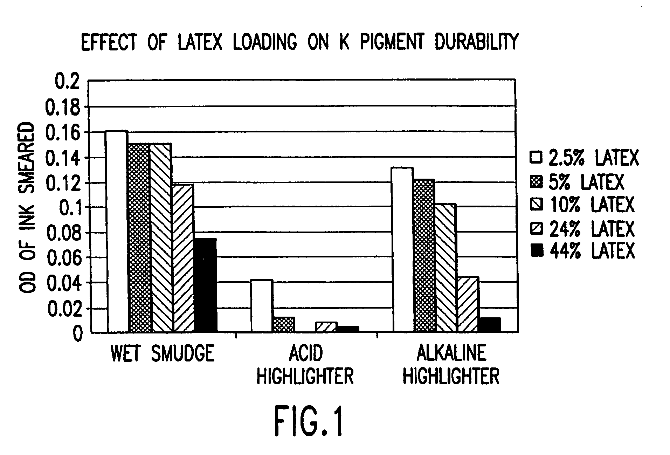

A number of preferred embodiments of the invention will now be described with reference to the drawing, in which:-
Figure 1 shows how the concentration of latex in the undercoat/fixer versus durability of a black pigment ink.

### DEFINITIONS

Fluid - includes either or both the reactant fluid and ink compositions.

Reaction - means that the solubility or phase state of one or more components is changed as to immobilize the movement of at least one colorant on the print 35 medium in the event that one fluid comes in contact with another fluid and interacts.

Reactant Fluid - also known as a 5th pen fluid or fixer fluid. A fluid that is typically substantially devoid of color (i.e., the reactant fluid may contain no colorant (e.g., dye or pigment), or it may contain a colorant that does not absorb visible light but may absorb in either or both the IR or UV spectrums). The reactant fluid comprises a component (a molecule or complex, or a functional group in a molecule or complex) that is reactive with a component (a molecule or complex, or a functional group in a molecule or complex), including the colorant, in an ink thus providing for enhanced image integrity of printed areas created with the ink, such as, increased permanent (e.g. smearfastness); in the event that the reactant fluid and the ink are printed at least partially on a same pre-determined area on a print medium, or on pre-determined areas adjacent one another on a print medium. The reactive fluid is reactive with at least one ink formulated according to the present invention.

Ink - a fluid containing at least one colorant, the ink absorbing in one or more regions (e.g., visible, IR, UV, etc.). Ink-jet printers typically contain an ink set with black, magenta, cyan, and yellow inks, commonly known as a 4-pen ink set. Additional pens with additional color inks may also be present.

The present invention is directed to fluid sets, in particular for use in coloring applications, and more particularly for use in ink-jet printing. The present fluid set combines the benefits of interactive fluids while utilizing dyes providing enhanced image integrity to the ink-jet formula. The fluid set may be used in many applications of aqueous-based printing inks, in particular ink-jet inks for use in commercially available inkjet printers such as DESKJET® printers, manufactured by Hewlett-Packard Company, of Delaware; and other commercially available home or office ink-jet printers.

Aqueous inks of this invention comprise, by weight, from about 0.5 to about 20 wt % colorant, preferably from about 1 to about 10%, and more preferably from about 1 to about 6 wt % colorant; from about 1 to about 40 wt % of one or more organic solvents; and optionally up to about 20 wt % of an additive independently selected from the group consisting of immobilizing agents, surfactants, buffers, biocides, and mixtures thereof.

### COLORANTS

At least one of the inks of the present fluid set contains at least one colorant according to the present invention. Without being limited by theory, it is believed that the colorants of this invention interact with the reactive fluid, or 5^{th} fluid, to bind on the media which provides the benefits referred to above.

Colorants are pigment based. As used herein, the term 'pigment' refers to a colorant that is insoluble in the aqueous vehicle, and includes pigments that are dispersed with the said of covalently bonded polymers.

In one embodiment herein, the dispersing agent contains a carboxylate salt that forms a double charge layer around the pigment particle. This charge will be destroyed by the acid component in the reactive fluid described below, and the pigment will no longer be water dispersed. In another preferred embodiment, the dispersant also contains an aromatic character, such as from styrene monomers which can favorably interact with the styrene components of the reactant fluid described below. Without being limited by theory, it is believed that the pi-pi interaction of the aromatic components in the latex reactive fluid and the binder and dispersion polymers in the ink provide the mechanical durability and wetfastness of this invention.

Examples of self-dispersed pigments for use herein are those provided by Cabot Company under the Trade name Cabojet™. In particular, self-dispersed pigments utilizing covalently bound polymers containing styrene are most preferred.

### REACTIONS AND REACTIVE COMPONENTS OR REACTIVE AGENTS

The reactant fluids of this invention are preferably applied under the ink layer in the printing process using methods known in the art for 5^{th} pen applications or by means of a roller application onto the media before printing.

The reactant fluids herein contain from about 6 to 50%, preferably about 10 to about 20% by wt of glycolic acid, from about 12 to about 50%, preferably 15 to 40%, by wt of cationic latex, and from 0 to about 50% by wt of glycerol. Succinic acid, or other organic acids may be substituted for glycolic acid. In one embodiment, the cationic latex is a dispersed styrene butadiene particle. Other examples of suitable hydrophobic latexes include those with a polyurethane or polyacrylate backbone.

The reactive fluid, in addition to water and the reactant agent described above, may also contain one or more of the same ingredients and in the same % amounts commonly formulated into inks. For instance, solvents, surfactants, amphiphiles, biocides, buffers may be present in the reactive fluids of this invention.

The fluids of the present invention may comprise from about 1 to about 40 wt % of at least one organic solvent. More preferably the fluids comprise from about 1 to about 25 wt % of at least one organic solvent with from about 5 to about 15 wt % being the more preferred. Optionally, one or more water-soluble surfactants/amphiphiles (0 to about 40 wt %, preferably about 0.1 to about 5 wt %) may be present. The inks of this invention have a pH in the range of from about 7 to about 11, preferably from about 8 to about 10, more preferably from about 8 to about 9. The reactive fluids of this invention have a pH in the range of from about 2.5 to about 7, preferably from about 3 to about 6, more preferably from about 4 to about 5.

### AQUEOUS VEHICLE

All concentrations herein are expressed in weight percentages, unless otherwise indicated. The purity of all components is that employed in normal commercial practice for ink-jet inks.

Other ingredients added to the inks of this invention should be compatible with the above colorants employed in this invention. Likewise, other ingredients added to the reaction fluids of this invention should be compatible with the above reactive agents employed in this invention. These other ingredients are generally present, if at all, at levels of from 0% to about 20% by wt of composition.

The aqueous vehicle is water or a mixture of water and at least one water-soluble organic solvent, as is well-known in the art. Selection of a suitable mixture depends on requirements of the specific application, such as the desired surface tension and viscosity, the selected colorant or reactive agent, drying time of the ink-jet fluid, and the type of print medium onto which the fluid will be printed. For a discussion of inks and their properties, see The Printing Manual, 5th Ed., Leach et al. (Chapman and Hall, 1993). See also U.S. Patent Nos. 2,833,736; 3,607,813,; 4,104,061; 4,770,706; and 5,026,755.

The water soluble organic solvents suitably employed in the present ink-jet ink compositions include any of, or a mixture of two or more, of such compounds as nitrogen-containing ketones, such as 2-pyrrolidinone, N-methyl-2-pyrrolidinone (NMP), 1,3-dimethylimidazolid-2-one, and octyl-pyrrolidinone; diols such as ethanediols (e.g., 1,2-ethanediol), propanediols (e.g., 1,2-propanediol, 1,3-propanediol), butanediols (e.g., 1,2-butanediol, 1,3-butanediol, 1,4-butanediol), pentanediols (e.g., 1,2-pentanediol, 1,5-pentanediol), hexanediols (e.g., 1,2-hexanediol, 1,6-hexandiol, 2,5-hexanediol), heptanediols (e.g., 1,2-heptanediol, 1,7-heptanediol), octanediols (e.g., 1,2-octanediol, 1,8-octanediol); triolos such as 2-ethyl-2-hydroxymethyl-1,3-propanediol and ethylhydroxypropanediol (EHPD); and glycol ethers and thioglycol ethers, commonly employed in ink-jet inks such as polyalkylene glycols such as polyethylene glycols (e.g., diethylene glycol (DEG), triethylene glycol; tetraethylene glycol), polypropylene glycols (e.g., dipropylene glycol, tripropylene glycol, tetrapropylene glycol, polymeric glycols (e.g., PEG 200, PEG 300, PEG 400, PPG 400) and thiodiglycol. Preferably 2-pyrrolidinone, NMP, DEG, EHPD and 1,5-pentanediol are employed in the practice of this invention with 2-pyrrolidinone, DEG and 1,5-pentanediol being the most preferred solvents.

Suitable surfactants may be nonionic or anionic when used in the fluid vehicle. Examples of suitable nonionic surfactants include, secondary alcohol ethoxylates (e.g., Tergitol series available form Union Carbide Co.), nonionic fluoro surfactants (such as FC-170C available from 3M), nonionic fatty acid ethoxylate surfactants (e.g., Alkamul PSMO-20 available from Rhone-Poulenc), fatty amide ethoxylate surfactants (e.g., Aldamide L-203 available from Rhone-Poulenc), and acetylenic polyethylene oxide surfactants (e.g., Surfynol series, available from Air Products & Chemicals, Inc.). Examples of anionic surfactants include alkyldiphenyloxide surfactants (such as Calfax available from Pilot), and Dowfax (e.g., Dowfax 8390 available from Dow), and fluorinated surfactants (Fluorad series available form 3M). Cationic surfactants may be used in the reactive fluid which interacts with the ink vehicle and/or ink vehicle colorant. Cationic surfactants that may be used include betaines (e.g., Hartofol CB-45 available from Hart Product Corp., Mackam OCT-50 available form McIntyre Group Ltd., Amisoft series available from Ajinomoto), quaternary ammonium compounds (e.g., Glucquat series available from Amerchol, Bardac and Barquat series available from Lonza), cationic amine oxides (e.g., Rhodamox series available form Rhone-Poulenc, Barlox series available from Lonza) and imidazoline surfactants (e.g., Miramine series available from Rhone-Poulenc, Unamine series available from Lonza).

Buffers may be used to modulate pH and they can be organic based biological buffers or inorganic buffers such as sodium phosphate. Furthermore, the buffer employed should provide a pH ranging from about 4 to about 9 in the practice of the invention. Examples of preferably employed organic buffers include Trizma base, available from companies such as Aldrich Chemical (Milwaukee, WI), 4-morpholinoethanesulfonic acid (MES) and 4-morpholinopropanesulfonic acid (MOPS).

Any of the biocides commonly employed in ink-jet inks may be employed in the practice of the invention, such as NUOSEPT 95, available form Hals America (Piscataway, N.J.); Proxel GXL, available from Avecia (Wilmington, DE); and glutaraldehyde, available from Union Carbide Company (Bound Brook, N.J.) under the trade designation UCARCIDEW 250. Proxel GXL is the preferred biocide.

### PRINTING METHODS

This invention also encompasses a method for inkjet printing with the colorants and 5^{th} pen, reactive fluids discussed above. Alternatively, the latex reactive fluid may be deposited onto the substrate by any know means, including roller, spray painting, piezo, or other typical methods of applying a layer of material on a substrate.

### EXAMPLES

### Example 1

Figure 1 shows how the concentration of latex in the undercoat/fixer versus durability of a black pigment ink. The height of the bars represent how much ink smudged in various test (wet finger, hi-liter, etc.) High bars are worse than lower bars.

A loading of 44% latex (solid bar) gives superior durability. At 24% latex (checkered bar), the formula provides for reliability, especially with a roller mechanism.

Concentrations of 10% or lower(stripped bars) give lower durabilities.

### Example 2

A representative Black pigment ink formula

| Black (pigment based) | Wt % |
|---|---|
| Cabojet 300 from Cabot Company | 3% |
| Joncryl 586 | 1.50% |
| Joncryl HPD 671 | 0.15 |
| Zonyl FSO | 0.10% |
| Surfactant | 0.50% |
| 2-Pyrrolidone | 7% |
| 1,6-hexanediol | 2% |
| LEG-1 | 1.50% |
| Biocide | 0.20% |
| Water | 84% |
| PH | 8.5-9.3 |

This formula uses an experimental polymer-attached pigment supplied to us by Cabot Corp.

### Example 3

A representative reactive fluid formula

| Reactive Fluid | Wt % |
|---|---|
| Styrene Cationic Latex (49.2% solids pH 3.7) | 24% |
| Glycolic acid | 12% |
| Glycerol | 40% |
| Water | 24% |

### Example 4

Representative color ink formulas

| Color Ink Formulas | Cyan | Magenta | Yellow |
|---|---|---|---|
| Glycerol | 7.5 | 7.5 | 7.5 |
| Tris | 0.2 | 0.2 | 0.2 |
| Proxel GLX | 0.2 | 0.2 | 0.2 |
| 2EG | 5 | 5 | 5 |
| EHPD | 7.5 | 7.5 | 7.5 |
| Tergitol 15S-7 | 0.5 | 0.5 | 0.5 |
| Zong FSO-100 | 0.4 | 0.4 | 0.4 |
| DB199 PJC1 | 1.7 | | |
| PF Magenta 2-NH4 | | 2.3 | |
| RR180pacified | | 0.4 | |
| PF Yellow2-NH4 | | | 1.3 |
| DY132 | | | 1.6 |
| PH | 8.5 | 8.5 | 8.5 |

### Example 5

Representative color ink formula

| | |
|---|---|
| Cabot self-dispersed pigment, dispersed with covalently attached styrene maleicanhydride | 3.00% |
| 10% Joncryl 586B | 15.00% |
| 10% Joncryl 671 | 1.50% |
| Zonyl FSO | 0.20% |
| Surfynol 61 | 1.00% |
| 2-Pyrrolidone | 7.00% |
| 1,2-Hexanediol | 4.00% |
| LEG-1 | 1.50% |
| Proxel GXL | 0.20% |
| Water | Balance |
| pH | 8.5-9.3 |

### Example 6

Representative reactive fluid formulas

| | **1** | **2** | **3** | **4** | **5** | **6** |
|---|---|---|---|---|---|---|
| glycolic acid | 12.20% | 12.00% | 12.10% | 48.60% | 12.90% | 0.00% |
| glycerol | 7.50% | 40.00% | 0.00% | 4.10% | 51.30% | 39.20% |
| cationic latex -49.2% solids pH 3.7 | 25.10% | 24.00% | 43.90% | 20.50% | 12.80% | 23.40% |
| water | 55.00% | 24.00% | 44.00%1 | 26-60% | 23.00% | 37.30% |

## Claims

1. An inkset for inkjet printing comprising:
I) an ink comprising a colorant and organic solvent, wherein said colorant in said ink is a pigment dispersed by a polymeric dispersing agent covalently bonded to the pigment; and
II) a reactive fluid comprising a cationic latex reactive agent which reacts with said colorant upon contact, wherein the cationic latex reactive agent is present in an amount from 12wt% to 50wt% of reactive fluid, and comprises dispersed butadiene particles.

2. An inkset as claimed in claim 1, the reactive fluid contains from about 6wt% to 50wt% organic acid, and wherein the cationic latex reactive agent comprises dispersed styrene butadiene particles.

3. An inkset as claimed in Claim 1 or 2, wherein said colorant in said ink is present in an amount from 0.5 to 20 wt % of ink, wherein said organic solvent in said ink is present in an amount from 1 to 40 wt % of ink, and wherein said ink additionally comprises from 0 to 20 wt % of an additive which is an immobilizing agent, a surfactant, a buffer, a biocide, or any mixture thereof.

4. An inkset as claimed in Claim 1, 2 or 3, wherein the dispersing agent contains a carboxylate salt that forms a double charge layer around said pigment particle.

5. An inkset as claimed in Claim 1, 2 or 3, wherein the dispersing agent includes an aromatic moiety.

6. An inkset as claimed in claim 5, wherein the dispersing agent contains styrene.

7. An inkset as claimed in any preceding claim, wherein the ink has a pH of from about 8 to about 10.

8. An inkset as claimed in claim 7, wherein the ink has a pH of from about 8 to about 9.

9. An inkset as claimed in any preceding claim, wherein the reactive fluid has a pH of from about 3 to about 6.

10. An inkset as claimed in claim 9, wherein the reactive fluid has a pH of from about 4 to about 5.

11. An inkset as claimed in any preceding claim wherein said reactive fluid additionally comprises from 6 to 50 wt % organic acid, wherein said organic acid is a glycolic acid, a succinic acid, or any mixture thereof.

12. An inkset as claimed in any preceding claim, wherein said reactive fluid additionally comprises from 0 to 50 wt % glycerol.

13. A method of improving the durability of inkjet printing using an inkset as claimed in any preceding claim.

14. A method as claimed in Claim 13, wherein said reactive fluid is applied to a substrate by means of an inkjet pen or a roller applicator.

## Patentansprüche

1. Tintensatz zum Tintenstrahldrucken, umfassend:
I) eine Tinte, umfassend ein Farbmittel und ein organisches Lösungsmittel, wobei das genannte Farbmittel in der genannten Tinte ein Pigment ist, das durch ein Polymer-Dispergiermittel dispergiert ist, das kovalent an das Pigment gebunden ist; und
II) eine reaktive Flüssigkeit, umfassend ein kationisches reaktives Latexmittel, das mit dem genannten Farbmittel bei Kontakt reagiert, wobei das kationische reaktive Latexmittel in einer Menge von 12 Gew.-% bis 50 Gew.-% an reaktiver Flüssigkeit vorhanden ist und dispergierte Butadienpartikel umfasst.

2. Tintensatz nach Anspruch 1, wobei die reaktive Flüssigkeit von etwa 6 Gew.-% bis 50 Gew.-% organische Säure enthält und wobei das kationische reaktive Latexmittel dispergierte Styrolbutadienpartikel umfasst.

3. Tintensatz nach Anspruch 1 oder 2, wobei das genannte Farbmittel in der genannten Tinte in einer Menge von 0,5 bis 20 Gew.-% an Tinte vorhanden ist, wobei das genannte organische Lösungsmittel in der genannten Tinte in einer Menge von 1 bis 40 Gew.-% an Tinte vorhanden ist und wobei die genannte Tinte zusätzlich von 0 bis 20 Gew.-% eines Zusatzmittels umfasst, das ein Immobilisierungsmittel, ein Tensid, ein Puffer, ein Biozid oder Mischungen davon ist.

4. Tintensatz nach Anspruch 1, 2 oder 3, wobei das Dispergiermittel ein Carboxylatsalz enthält, das eine Doppelladungsschicht um den Pigmentpartikel bildet.

5. Tintensatz nach Anspruch 1, 2 oder 3, wobei das Dispergiermittel einen aromatischen Rest enthält.

6. Tintensatz nach Anspruch 5, wobei das Dispergiermittel Styrol enthält.

7. Tintensatz nach einem der vorstehenden Ansprüche, wobei die Tinte einen pH-Wert von etwa 8 bis etwa 10 aufweist.

8. Tintensatz nach Anspruch 7, wobei die Tinte einen pH-Wert von etwa 8 bis etwa 9 aufweist.

9. Tintensatz nach einem der vorstehenden Ansprüche, wobei die reaktive Flüssigkeit einen pH-Wert von etwa 3 bis etwa 6 aufweist.

10. Tintensatz nach Anspruch 9, wobei die reaktive Flüssigkeit einen pH-Wert von etwa 4 bis etwa 5 aufweist.

11. Tintensatz nach einem der vorstehenden Ansprüche, wobei die genannte reaktive Flüssigkeit zusätzlich von 6 bis 50 Gew.-% an organischer Säure umfasst, wobei die genannte organische Säure eine Glykolsäure, eine Bernsteinsäure oder eine Mischung davon ist.

12. Tintensatz nach einem der vorstehenden Ansprüche, wobei die genannte reaktive Flüssigkeit zusätzlich von 0 bis 50 Gew.-% Glycerol umfasst.

13. Verfahren zum Verbessern der Haltbarkeit beim Tintenstrahldrucken unter Verwendung eines Tintensatz nach einem der vorstehenden Ansprüche.

14. Verfahren nach Anspruch 13, wobei die genannte reaktive Flüssigkeit durch einen Tintenstrahlstift oder einen Rollenapplikator auf ein Substrat aufgebracht wird.

## Revendications

1. Ensemble d'encres pour imprimante à jet d'encre comprenant :
(I) une encre comprenant un colorant et un solvant organique, ledit colorant dans ladite encre étant un pigment dispersé par un agent dispersant polymère lié de façon covalente au pigment ; et
(II) un fluide réactif comprenant un agent réactif à base de latex cationique qui réagit avec ledit colorant lors du contact, l'agent réactif à base de latex cationique étant présent dans une quantité de 12 % en poids à 50 % en poids de fluide réactif et comprenant des particules de butadiène dispersées.

2. Ensemble d'encres selon la revendication 1, dans lequel le fluide réactif contient d'environ 6 % en poids à 50 % en poids d'acide organique, et dans lequel l'agent réactif à base de latex cationique comprend des particules de styrène butadiène dispersées.

3. Ensemble d'encres selon l'une des revendications 1 ou 2, dans lequel ledit colorant dans ladite encre est présent dans une quantité de 0,5 à 20 % en poids d'encre, dans lequel ledit solvant organique dans ladite encre est présent dans une quantité de 1 à 40 % en poids d'encre, et dans lequel ladite encre comprend de plus de 0 à 20 % en poids d'un additif qui est un agent d'immobilisation, un agent tensio-actif, un tampon, un biocide ou tout mélange de ceux-ci.

4. Ensemble d'encres selon l'une des revendications 1, 2 ou 3, dans lequel l'agent dispersant contient un sel carboxylate qui forme une double couche de charge autour de ladite particule de pigment.

5. Ensemble d'encres selon l'une des revendications 1, 2 ou 3, dans lequel l'agent dispersant comprend une fraction aromatique.

6. Ensemble d'encres selon la revendication 5, dans lequel l'agent dispersant contient du styrène.

7. Ensemble d'encres selon l'une quelconque des revendications précédentes, dans lequel l'encre a un pH d'environ 8 à environ 10.

8. Ensemble d'encres selon la revendication 7, dans lequel l'encre a un pH d'environ 8 à environ 9.

9. Ensemble d'encres selon l'une quelconque des revendications précédentes, dans lequel le fluide réactif a un pH d'environ 3 à environ 6.

10. Ensemble d'encres selon la revendication 9, dans lequel le fluide réactif a un pH d'environ 4 à environ 5.

11. Ensemble d'encres selon l'une quelconque des revendications précédentes, dans lequel ledit fluide réactif comprend de plus de 6 à 50 % en poids d'acide organique, ledit acide organique étant un acide glycolique, un acide succinique ou tout mélange de ceux-ci.

12. Ensemble d'encres selon l'une quelconque des revendications précédentes, dans lequel ledit fluide réactif comprend de plus de 0 à 50 % en poids de glycérol.

13. Procédé d'amélioration de la durabilité d'une impression par jet d'encre à l'aide d'un ensemble d'encres selon l'une quelconque des revendications précédentes.

14. Procédé selon la revendication 13, dans lequel ledit fluide réactif est appliqué à un substrat au moyen d'un stylo à jet d'encre ou d'un applicateur à rouleau.
